# EUROPÄISCHE PATENTANMELDUNG

(11) **EP 0 791 875 A1**
(43) Veröffentlichungstag der Anmeldung: **27.08.1997**
(21) Anmeldenummer: 96102784.4
(22) Anmeldetag: 24.02.1996
(51) Int. Cl.: G05F 1/70, H02J 3/01, H02P 7/622, H02P 3/24, H02P 1/28

(54) **Antriebssystem für Hubwerke und Werkzeugmaschinen**

(71) Anmelder: FACHHOCHSCHULE KONSTANZ, D-78462 Konstanz (DE)
(72) Erfinder: Jessler, Ralf, Dipl.-Ing., 78479 Reichenau (DE)

(57) **Zusammenfassung**

Die Netzrückwirkungen drehzahlgeregelter Drehstromantriebe in Drehstromstellertechnik mit Gleichstrombremseinrichtung sind nach den demnächst geltenden verschärften Vorschriften nicht mehr zulässig.
Erfindungsgemäß können die Netzrückwirkungen dadurch eliminiert werden, wenn bei Fahrbetrieb des Antriebes über den Drehstromsteller ein selbstgeführter Stromrichter als aktives Parallelfilter die Oberschwingungsströme und optional die Blindströme kompensiert und bei Bremsbetrieb als selbstgeführter Gleichrichter dem Netz die, für die Gleichstrombremsung benötigte Energie mit dem Leistungsfaktor λ=1 entnimmt.

## Beschreibung

Die Erfindung bezieht sich auf ein elektrisches Antriebssystem zur Drehzahlregelung von Asynchronmaschinen für den Einsatz in Hubwerken und Werkzeugmaschinen mit dem Leistungsfaktor λ=1 am Netzanschlußpunkt. Das Antriebssystem besteht aus einem Drehstromsteller, einem selbstgeführten Stromrichter in Drehstrom-Brückenschaltung, einem Tiefsetzsteller und einer Asynchronmaschine.

Bisherige Antriebssysteme mit Drehstromsteller und Gleichstrombremsung über einen netzgeführten Stromrichter haben sich technisch und wirtschaftlich, z.B. in der Aufzugstechnik, außerordentlich bewährt. Bei den demnächst geltenden verschärften Vorschriften über die Anschlußbedingungen elektrischer Betriebsmittel sind die Netzrückwirkungen des Antriebssystems bezüglich der nichtsinusförmigen Netzströme, der Kommutierungseinbrüche in der Netzspannung und der stoßartigen Blindstrombelastungen nicht mehr zulässig. Zum Stand der Technik auf dem Gebiet der drehzahlgeregelten Drehstromantriebe ist auch die Speisung der Maschine über einen Zwischenkreisumrichter mit netz- und maschinenseitigen selbstgeführten Stromrichter zu nennen. In vielen Anwendungsgebieten ist die Anwendung dieser Technik im unteren Leistungsbereich der Anlagen zu aufwendig.

Der Erfindung liegt die Aufgabe zugrunde, das bewährte Antriebssystem mit einem Drehstromsteller für den Fahrbetrieb und einer Gleichstrombremseinrichtung für den Bremsbetrieb dahingehend zu verbessern, daß die Netzrückwirkungen eliminiert werden.
Die Aufgabe wird erfindungsgemäß dadurch gelöst, daß parallel zum Drehstromsteller ein selbstgeführter Stromrichter, dem ein Tiefsetzsteller in Reihe geschaltet ist, angeschlossen wird.

Die Erfindung wird im folgenden anhand der in den Figuren dargestellten Ausführungsbeispielen näher erläutert. Es zeigen:
Fig. 1 das Blockschaltbild des Antriebssystems, bestehend aus einem Drehstromsteller (1), einem selbstgeführten Stromrichter in Drehstrom-Brückenschaltung (2), einem Tiefsetzsteller (3) und einer Asynchronmaschine (4),
Fig.2 die Schaltung bei Fahrbetrieb, wobei die im Eingriff befindlichen Stromrichter durch die Strichstärke hervorgehoben sind,
Fig.3 die Schaltung bei Bremsbetrieb, wobei die im Eingriff befindlichen Stromrichter durch die Strichstärke hervorgehoben sind,
Fig.4 den Tiefsetzsteller mit Regeleinrichtung zur Einprägung des Bremsstromes.

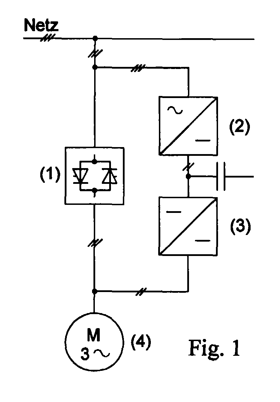

In Fig. 1 wird mit Hilfe des Drehstromstellers (1) das Drehzahlstellen durch eine Schlupfänderung der Asynchronmaschine (4) bewirkt. Ein Abbremsen des Antriebes wird durch eine kontrollierte Gleichstromerregung der Ständerwicklung ermöglicht.
Der selbstgeführte Stromrichter (2) wirkt bei Betrieb des Drehstromstellers (1) sowohl als aktives Filter zur Kompensation der Stromoberschwingungen im Netz, als auch optional gleichzeitig als elektronischer Phasenschieber, der am Anschlußpunkt des Netzes den Leistungsfaktor λ=1 bewirkt.
Bei Bremsbetrieb arbeitet der selbstgeführte Stromrichter (2) als Gleichrichter mit sinusförmiger Stromaufnahme, in Phase zur Netzspannung. Über den Tiefsetzsteller (3) kann das Bremsmoment stufenlos eingestellt werden.

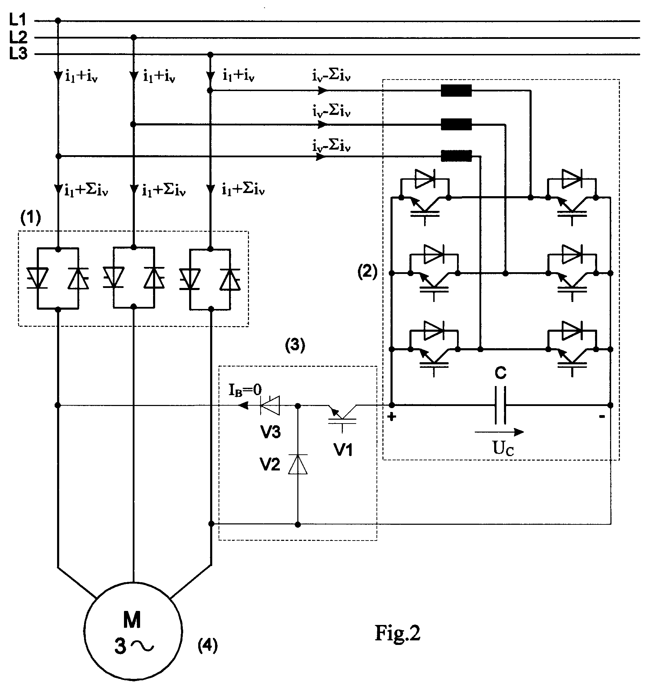

In Fig. 2 wird über den Drehstromsteller (1) die Drehzahl der Asynchronmaschine (4) gestellt. Ohne den als aktives Filter arbeitenden selbstgeführten Stromrichter (2) würde der Antrieb dem Netz einen stark oberschwingungshaltigen Strom (Klirrfaktor kᵢ ≈ 50%) entnehmen, den man nach Fourier in eine sinusförmige Grundschwingung i₁ mit Netzfrequenz und in eine Summe sinusförmiger Schwingungen Σi_{ν} höherer Frequenzen zerlegen kann. Der als aktives Filter arbeitende selbstgeführte Stromrichter (2) (Europäische Patentanmeldung: Elektronischer Strom-Oberschwingungskompensator, Veröffentlichungsnummer: 0 685 919 A1) entnimmt an den Netzanschlußpunkten die vom Antrieb verursachte negierte Summe der Oberschwingungsströme Σi_{ν},vermehrt um einen sinusförmigen Verluststrom iᵥ. Der in Phase mit der Netzspannung liegende Verluststrom iᵥ lädt den Kondensator C des selbstgeführten Stromrichters (2) auf und hält die Gleichspannung U_{C} während des Kompensationsbetriebes konstant. Dem Netz werden somit nur noch rein sinusförmige Ströme entnommen. Ohne Mehraufwand in der Steuerung und Regelung des selbstgeführten Stromrichters (2) können gleichzeitig die Blindanteile der Netzströme gänzlich kompensiert werden, so daß der Leistungsfaktor der Anlage λ=1 erreicht werden kann.

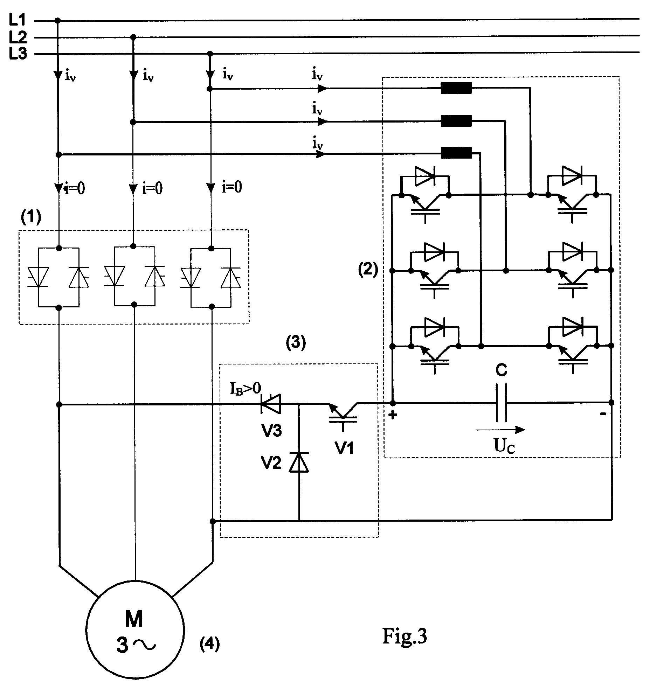

In Fig. 3 sind die Thyristoren des Drehstromstellers (1) abgeschaltet. Der selbstgeführte Stromrichter (2) bleibt ohne Schaltungsänderung eingeschaltet und arbeitet nun als selbstgeführter Gleichrichter. Zusätzlich wird der Tiefsetzsteller (3) über den Thyristor V3 zugeschaltet und die Gleichstrombremsung der Asynchronmaschine (4) eingeleitet. Hierbei wird dem Kondensator C des selbstgeführten Stromrichters (2) Gleichstromenergie entnommen. Die Regelung des selbstgeführten Stromrichters (2), die die Spannung am Kondensator C konstant halten soll, deckt diese Gleichstromenergie durch Aufnahme eines sinusförmigen Verluststromes iᵥ. Dieser Strom ist analog dem Betrieb als aktives Filter in Phase mit der Netzspannung (λ=1). Über den Tiefsetzsteller (3) wird die Höhe des erforderlichen Bremsstromes in die Ständerwicklung der Asynchronmaschine (4) eingeprägt.

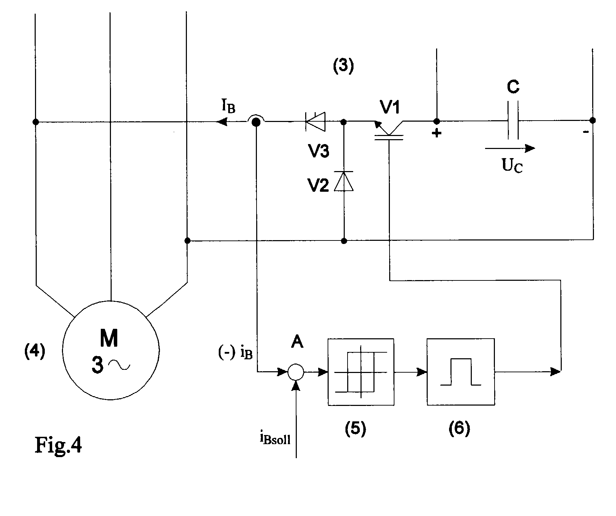

Fig.4 zeigt den Tiefsetzsteller (3) und eine einfache Variante des für die Stromeinprägung erforderlichen Regelkreises. An der Vergleichsstelle A wird der Istwert des Bremsstromes i_{B} mit dem von einem übergeordneten Betriebsmanagement vorgegebenen Sollwert des Bremsstromes i_{Bsoll} verglichen. Die Soll- Istwertdifferenz gelangt auf den Zweipunktregler (5), der mit seinem Ausgang über die Ansteuerschaltung (6) den Halbleiterschalter V1 so steuert, daß der Bremsstrom I_{B} innerhalb eines vorgegebenen Hysteresebandes gehalten wird.

## Patentansprüche

1. Elektrisches Antriebssystem zur Drehzahlregelung von Asynchronmaschinen mit sinusförmiger Stromaufnahme am Netzanschlußpunkt, bestehend aus einem Drehstromsteller, einem selbstgeführten Stromrichter in Drehstrom-Brückenschaltung, einem Tiefsetzsteller und einer Asynchronmaschine, dadurch gekennzeichnet, daß bei Speisung der Asynchronmaschine über den Drehstromsteller, der selbstgeführte Stromrichter als aktives Filter und bei Gleichstrombremsung als selbstgeführter Gleichrichter mit sinusförmiger Stromaufnahme wirkt.

2. Anordnung nach Anspruch 1, dadurch gekennzeichnet, daß bei Gleichstrombremsung an den Ausgangsklemmen des selbstgeführten Stromrichters ein Tiefsetzsteller angeordnet ist, der die kontrollierte Stromeinprägung für die Gleichstromerregung der Ständerwicklung der Asynchronmaschine ermöglicht.

3. Anordnung nach Anspruch 1, dadurch gekennzeichnet, daß bei Fahrbetrieb der selbstgeführte Stromrichter eine gleichzeitige Kompensation der Oberschwingungsströme und der Blindströme des Antriebes ermöglicht, so daß am Netzanschlußpunkt der Leistungsfaktor λ=1 beträgt.
